# EUROPEAN PATENT APPLICATION

(11) **EP 2 632 057 A1**
(43) Date of publication of application: **28.08.2013**
(21) Application number: 12305219.3
(22) Date of filing: 24.02.2012
(51) Int. Cl.: H04B 7/06

(54) **Apparatus, method and computer program for determining a beampattern of at least two antenna elements**

(71) Applicant: Alcatel Lucent, 75007 Paris (FR)
(72) Inventor: Jeschke, Michael, 70184 Stuttgart (DE)
(74) Representative: 2SPL Patentanwälte

(57) **Abstract**

Embodiments relate to an apparatus (400; 500; 800) for determining a beam pattern (180) of at least two antenna elements (160; 460), the at least two antenna elements (160; 460) being feedable with a signal (210; 410) using radio resources of a radio resource set, wherein the radio resource set comprises at least a first radio resource subset associated to a first plurality of users and a second radio resource subset associated to a second plurality of users of a cellular communication system, wherein the first and the second plurality of users are both associated to the same cell of the cellular communication system, the apparatus (400; 500; 800) comprising a processor (430) operable to determine, for each of the first and the second radio resource subset of the signal (210; 410), a radio resource subset specific beam pattern (180) of the at least two antenna elements (160; 460), such that a first radio resource subset specific beam pattern (180-1) corresponding to the first radio resource subset is different from a second radio resource subset specific beam pattern (180-2) corresponding to the second radio resource subset.

## Description

Embodiments of the present invention generally relate to wireless communication systems, and particularly to digital beam forming concepts for wireless communications.

### Background

Demands for higher data rates for mobile services are steadily increasing. At the same time modern mobile communication systems, as 3^{rd} Generation (3G) systems, such as the Universal Mobile Telecommunications System (UMTS), and 4^{th} Generation (4G) systems, such as Long-Term Evolution (LTE), provide enhanced technologies, which enable higher spectral efficiencies and allow for higher data rates and cell capacities. For example, such technologies include beam forming with so-called Adaptive Antenna Arrays (AAA).

In many applications of antennas, point-to-point (p-t-p) communication is of interest. For that purpose, a highly directive antenna beam or antenna pattern may be used to advantage. A directional antenna beam may be realized by forming an antenna array comprising a plurality, i.e., at least two, of antenna elements or elemental radiators. For example, the individual antenna elements may be spaced *λ*/2 apart, wherein *λ* denotes the wavelength corresponding to a system carrier frequency *f_{c}* of the wireless signal. As the directivity of the antenna (array) increases, its gain also increases, leading to less required amplifier power, to less interference and/or to increased data throughput. The individual antenna elements of an antenna arrays may be aligned vertically and/or horizontally.

An Adaptive Antenna Array (AAA) or an adaptive antenna array processor may be regarded as a functional entity that may comprise a digital interface on one side. This digital interface may, for example, be the so-called fiber-based Common Public Radio Interface (CPRI), which defines an internal digital interface of base stations between Radio Equipment Controllers (REC) to local or remote radio units, also known as Radio Equipment (RE). On the other end, the adaptive antenna array processor may also comprise a Radio Frequency (RF) interface to or from RF components, such as the individual antennas or antenna elements. In downlink (DL), i.e. the direction from a base station to a mobile terminal, an adaptive antenna array processor may receive digital In-phase (I) and Quadrature (Q) baseband samples, e.g. via CPRI from a modem board of the base station, which may also be referred to as NodeB or eNodeB according to the 3^{rd} Generation Partnership Project (3GPP) terminology. The received I/Q baseband samples of the digital baseband signal may be processed in some way in the digital baseband domain, typically by applying complex valued beam forming weight coefficients, which may be written in vector-form, to the digital baseband signal. Finally, the adaptive antenna array processor may perform a Digital-to-Analogue (D/A) conversion and up-conversion or up-mixing of the weighted signal to the system carrier frequency per antenna element, each of which may be driven by a dedicated Power Amplifier (PA).

In a vertically arranged adaptive antenna array, which will be exemplarily assumed throughout this specification without loss of generality, one vertical column of *N*ₑₗₑₘ vertically arranged co-polarized antenna elements may be fed by *N*_{PA} power amplifiers, where *N*_{PA} ≥ 2. How the mapping between the *N*_{PA} power amplifiers and the *N*ₑₗₑₘ antenna elements is done is not important for the scope of the present specification. For example, there may be a 1:1 mapping, i.e., *N*ₑₗₑₘ = *N*_{PA}. Another example is that one power amplifier may be mapped to two or more radiating antenna elements, i.e., *N*ₑₗₑₘ > *N*_{PA}. Yet another example, the most general case, is that there is a passive Corporate Feeder Network (CFN) that maps the weighted radio signals from the *N*_{PA} power amplifiers to the *N*ₑₗₑₘ antenna elements. Such a feeder network may be expressed by an (*N*ₑₗₑₘ x *N*_{PA}) matrix. With such a feeder network, each power amplifier may be mapped to a certain number of physical antenna elements (some antenna elements might be shared by different power amplifiers when there are combiners in the feeder network), and therefore each power amplifier may be associated with a "logical antenna".

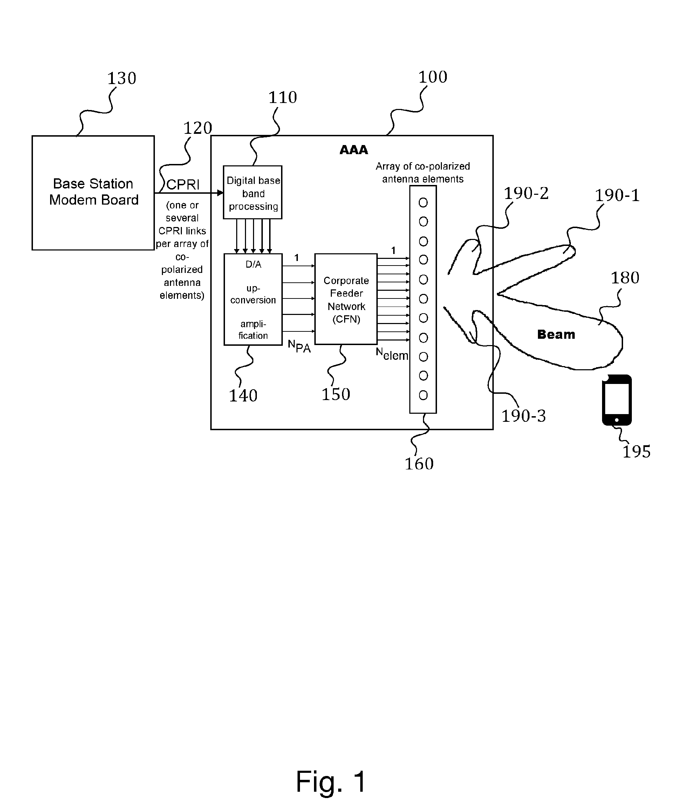

For the sake of the present specification, the value *N*ₑₗₑₘ is of no relevance, only *N*_{PA} is relevant, i.e., different implementations of embodiments of the present invention will be aware of *N*_{AP}, not of *N*ₑₗₑₘ. Fig. 1 illustrates the framework of embodiments of the invention and the main functional elements of an adaptive antenna array processing device. Note that an adaptive antenna array processing device normally comprises more than one column of co-polarized antenna elements - however, only one such column is depicted Fig. 1.

Fig. 1 shows a possible configuration of an adaptive antenna array 100 comprising a digital baseband processing unit 110, which is operable to process digital baseband signals in the digital baseband domain. The digital baseband signals are communicated to/from the digital baseband processing unit 110 via a serial digital baseband interface 120 connecting the adaptive antenna array 100 to a so-called Radio Equipment Control (REC) entity 130, which may be a base station/modem board, for example. In this context the adaptive antenna array 100 may also be regarded as a Radio Equipment (RE), which is controlled by the REC entity 130 via the digital baseband interface 120, e.g. CPRI. Both, the REC and the RE subsystems belong to a radio base station system and may be either co-located within a single cabinet or spatially separated. In the latter case, the adaptive antenna array 100 may be regarded as a remote unit, which may be spatially located at a different place than the REC entity 130. The adaptive antenna array 100 also comprises, for the downlink direction, a radio front-end 140, which performs a Digital-to-Analog (DA) conversion of the signals coming from the digital baseband processor 110, an up-conversion to the RF- or transmission band, and amplification of the analog signals of the *N*_{PA} signal branches. From the radio front end 140 the *N*_{PA} analog signals may be fed to an array of *N*ₑₗₑₘ co-polarized antenna elements 160 via an aforementioned Corporate Feeder Network (CFN) 150.

In conventional beam forming or adaptive antenna array concepts, an antenna pattern or beam, which may characterized e.g. by its beam direction (e.g. downtilt) and/or its beam width, may be defined by a set of complex coefficients *wₐ*, where *a* = 0,..., *N*_{PA}-1 (or *a* = 1,..., *N*_{PA}) denotes the index of the power amplifier, assuming a vertical array of *N*ₑₗₑₘ co-polarized antennas with their associated *N*_{PA} power amplifiers. These coefficients may be applied in the digital baseband processor 110 of the adaptive antenna array unit 100. Conventionally, the same set of complex weights is applied over a complete system bandwidth according to the baseband sampling frequency, which is typically 7.68, 15.36 or 30.72 MHz for the most common LTE system bandwidths of 5, 10 or 20 MHz. Moreover, a conventional beam shape is characterized by one "main lobe" 180 that is directed towards an optimum angle (e.g. downtilt) for maximum gain or directivity according to radio network planning, yielding sub-optimum coverage towards directions 190-1, 190-2, 190-3 outside this main lobe.

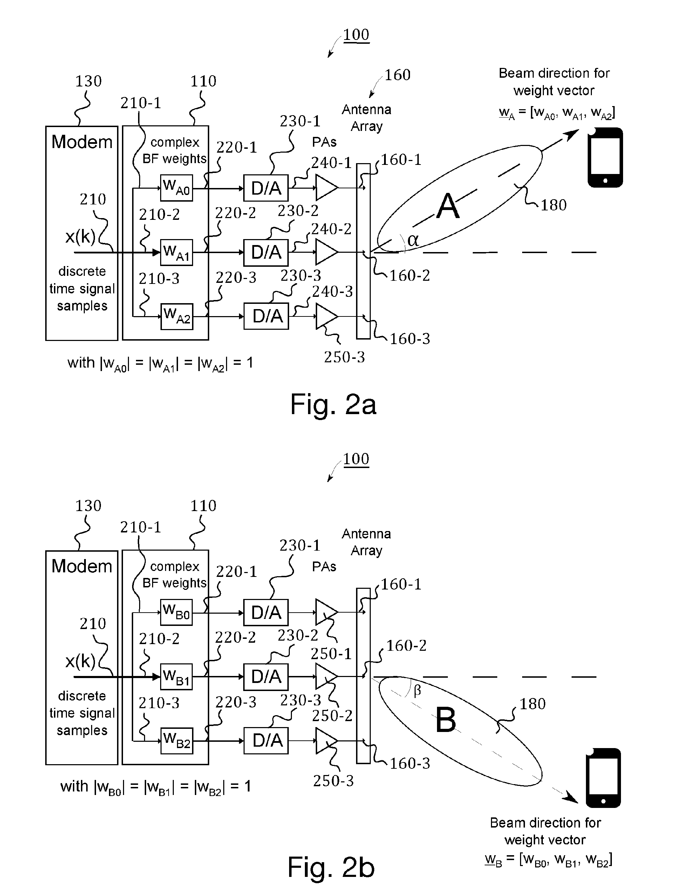

Today, various AAA concepts and roadmaps exist that may improve system coverage or capacity. For example, adaptive antenna arrays may be used for differential downtilt or beam shape in DL and/or UL. This is shown in Figs. 2a, b.

Fig. 2a shows a REC entity 130 in form of a modem device which is coupled to a digital baseband processing unit 110 of an AAA processor 100. Discrete time signal samples *x*(*k*) of a cell-specific signal 210 covering the whole useful system bandwidth of a communication system are transferred from the modem 130 the digital baseband processor 110 via one cell-specific CPRI link. The digital baseband signal *x*(*k*) 210 is exemplarily branched into *A* = 3 signal branches 210-1, 210-2 and 210-3, wherein each signal branch 210-1, 210-2, 210-3 is weighted with a complex beam forming weight coefficient *w*_{A*a*}, with *a* = [0, 1, ..., *A*-1] and |*w*_{A*a*}| = 1, to obtain weighted signal versions 220-1, 220-2, and 220-3 of the signal 210. Each of the weighted signal versions 220-1, 220-2, and 220-3 is digital-to-analog converted by the DAC's 230-1, 230-2, and 230-3 to obtain analog versions 240-1, 240-2, and 240-3 of the weighted digital signals 220-1, 220-2, and 220-3 corresponding to signal branches 210-1 to 210-3. Each of the analog signals 240-1, 240-2, and 240-3 traveling in the three signal branches is amplified by means of a corresponding power amplifier 250-1, 250-2, and 250-3 before being radiated by an antenna array 160 (here exemplarily comprising *N*ₑₗₑₘ = 3 antenna elements 160-1, 160-2, 160-3). The complex beam forming weights *w*_{A*a*}, with *a* = [0, 1, ..., *A*-1] correspond to a beam pattern "A" comprising a main lobe 180 facing in a first angle α. Therefore the complex beam forming weights may also be referred to as main lobe specific beam forming weight coefficients. Note that the digital baseband signal *x*(*k*) 210 is radio cell specific, i.e., it may comprise all signal components to be transmitted to the associated radio cell, and may comprise all frequencies of a useful system bandwidth, which may be 5, 10 or 20 MHz for LTE networks, for example. In the example of LTE, the digital baseband signal *x*(*k*) 210 may hence comprise all subcarriers of the LTE signal.

Fig. 2b differs from Fig. 2a in that the main lobe specific beam forming weight coefficients *w*_{B*a*}, with *a* = [0, 1, ..., *A*-1] and |*w*_{B*a*}| = 1, for beam B are chosen differently, leading to a main lobe 180 facing to a different angle *β*. Thereby, in case of a vertical antenna array 160, the two angles α and *β* may denote different electrical downtilts of the antenna array 160, respectively.

The AAA described referring to Fig. 2a and Fig. 2b feature is a key base characteristic for any AAA solution. It improves flexibility in network planning and removes the necessity to make compromises between DL and UL beam design. Embodiments of the present invention may fully co-operate with this conventional AAA base feature. Embodiments can be independently used in DL and UL and therefore make full use of the known feature of "differential DL and UL beam", and further improve it.

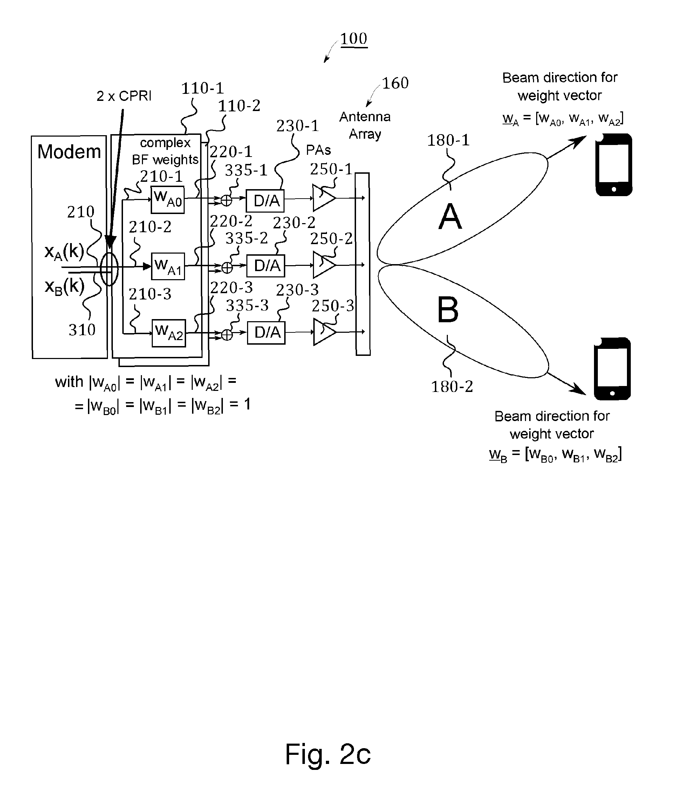

Another known adaptive antenna array concept is so-called "vertical sectorization", i.e., two vertically separated cell IDs in one horizontal sector, which is already supported by LTE Rel-8. This concept is illustrated in Fig. 2c.

Fig. 2c illustrates the concept of vertical sectorization, wherein each of the two main beams 180-1 and 180-2 corresponds to a different cell-ID, respectively. That is to say, beam 180-1, which is associated to the first main lobe specific beam forming weight coefficient *w*_{A*a*}, with a = [0, 1, ..., *A*-1] and |*w*_{A*a*}| = 1, corresponds to a first cell-ID specific digital baseband signal *x_{A}*(*k)* 210 delivered to a first digital signal processing unit 110-1 of the AAA 100 via a first CPRI interface. Correspondingly, the second beam 180-2, which is associated to the second main lobe specific beam forming weight coefficient *w*_{B*a*}, with *a* = [0, 1, ..., *A*-1] and |*w*_{B*a*}| = 1, is associated to a second cell-ID specific digital baseband signal *x_{B}*(*k*) 310, which is delivered to a second digital baseband processor 110-2 of the AAA unit 100 via a second dedicated CPRI interface. Each of the two different cell specific digital baseband signals 210, 310 is weighted with main lobe specific beam forming vectors **w**_{A} = [w_{A0}, w_{A1}, w_{A2}] or **w**_{B} = [w_{B0}, w_{B1}, w_{B2}], to obtain first and second weighted signal branches 220-1, 220-2, 220-3 and 320-1, 320-2, 320-3 of the two digital baseband signals 210 and 310. The weighted signal versions 220-1, 320-1 and 220-2, 320-2, and 220-3, 320-3 may be superimposed or combined by digital adders 335-1, 335-2, and 335-3, respectively, before being digital-to-analog converted, amplified and radiated via their associated cell-ID specific beam patterns 180-1 and 180-2. Since it can be assumed that the two cell-ID specific digital baseband signals 210 and 310 are mutually uncorrelated (for example, different Physical Downlink Shared Channels (PDSCHs) for different UEs), the digital summation points 335 are incoherent, i.e. all three power amplifiers 250-1 to 250-3 will process a signal of identical power. This balanced situation is desirable from a PA usage point of view.

This straight-forward AAA feature of Fig. 2c is currently discussed to improve capacity/coverage. However, it has the following drawbacks: Vertical sectorization requires twice the number of CPRI links between modem (base station) and Remote Radio Head (RRH) or AAA, it requires modified modem software (support of two cells instead of one, per horizontal sector). Also, there are unknown "reality losses" between simulations and real world, due to large overlap region between outer and inner beam (= outer/inner vertical sector) 180-1, 180-2 with correspondingly high interference and potential handover problems.

In all conventional beam forming concepts, such as described with reference to Figs. 2a-c a beam "B", which may be characterized e.g. by its beam direction (e.g. downtilt) and its beam width, is defined by a set of complex beam specific coefficients *w*_{B,a}, where *a* = 0..*A*-1 (or *a* = 1..*A*) denotes the index of the signal branch or PA, when assuming a vertical antenna array of A = *N*_{PA} co-polarized antennas with their associated PAs 250. These beam forming coefficients *w*_{B,a}, are applied in the digital baseband of the AAA. Conventionally, the same set of complex weights is applied over the complete signal bandwidth of a cell-ID specific baseband signal according to the baseband sampling frequency, which may be chosen to 7.68, 15.36 or 30.72 MHz for the most common LTE system bandwidths of 5, 10 or 20 MHz. Note that the useful baseband signal bandwidth of the cell-ID- or cell-specific signal in these examples is only 4.5, 9.0 or 18.0 MHz.

Against this background it is desirable to provide an adaptive antenna array concept which may further improve the aforementioned state of the art.

### Summary

It is one finding of the present invention to allow a beam shape of an antenna or an antenna array to be dependent on a subset of radio resources of a whole set of radio resources used by a cell-specific signal, i.e., a signal which is associated to a plurality of users served by a radio cell of a cellular communication system. Thereby the cell-specific signal is transmitted or received via the antenna or antenna array to/from the plurality of users associated to said cell.

In the following a (radio) cell is referred to as an area, for which a base station provides radio services, for which no mobility signaling has to be carried out since mobile terminals may be served by the same base station, i.e. the serving base station. A base station may operate multiple cells or sectors. So, if a Mobility Management Entity (MME) knows the mobile terminal's serving base station or cell or sector, the mobile terminal can be paged in this area using specific paging channels all registered mobile transceivers are listening to and, upon a response of the mobile transceiver, a radio link can be established.

Depending on various embodiments of the present invention the term radio resource may be understood as an element or a combination of elements of the group of a frequency resource, a bandwidth, a carrier, a sub-carrier, a time resource, a radio frame, a time slot, a symbol, a sub-frame, a Transmission Time Interval (TTI), a code resource, an Analog Spectrum Modulation (ASM) symbol, a Digital Spectrum Modulation (DSM) symbol, a Frequency Shift Keying (FSK) symbol, a Phase Shift Keying (PSK) symbol, a Pulse Code Modulation (PCM) symbol, a Quaternary Amplitude Modulation (QAM) symbol, a Frequency Hopping Spread Spectrum (FHSS) sequence, a Direct Sequence Spread Spectrum (DSSS) sequence, etc. In embodiments the plurality of radio resources may thus correspond to one of or a combination of the group of time resources, frequency resources, coding resources or transmission techniques. For example, a Data Radio Bearer (DRBs) also comprises a combination of physical radio resources and, hence, may be regarded as a radio resource itself.

Unlike classical antenna systems, embodiments of the present invention open up the possibility for shaping/selecting radio resource subset specific beams/beam patterns within one complete radio resource set spanned by the system bandwidth. Note that according to some embodiments, a radio resource subset thereby is not, as usual, dedicated or associated to only one user but to a subset of multiple users served by the cell or the serving base station. According to other embodiments, however, a radio resource subset may also be dedicated or associated to only one user. Both open up new ways of scheduling different subsets of users within a radio cell. In combination with at least one neighboring radio cell, inter-cell interference aware scheduling concepts may be provided. According to some embodiments of the present invention a radio resource subset may be understood as a combination of at least two different radio resources, such as time and frequency, for example, wherein the radio resource subset is dedicated to a plurality of users. In a particular embodiment, a radio resource subset may comprise at least one frequency (subcarrier), which is shared by a plurality of users being scheduled on said frequency during different user specific time intervals. Likewise, a radio resource subset may comprise at least one time slot, which is shared by a plurality of users being scheduled during said time slot on different user specific frequencies or subcarriers.

According to a first aspect of the present invention it is provided an apparatus for determining a beam pattern of at least two antenna elements, wherein the at least two antenna elements are feedable with or associated to a (common) signal using radio resources of a radio resource set. The radio resource set comprises at least a first radio resource subset associated to a first plurality of users and a second radio resource subset associated to a second plurality of users of a cellular communication system. The first and the second plurality of users are both associated to the same cell of the cellular communication system. The apparatus comprises a processor which is operable to determine, for each of the first and the second radio resource subset, a radio resource subset specific beam pattern of the at least one of the at least two antenna elements, such that a first radio resource subset specific beam pattern corresponding to the first radio resource subset is different from a second radio resource subset specific beam pattern corresponding to the second radio resource subset. Here, the term "radio resource subset specific" may be understood as "dependent on the radio resource subset". The radio resource subset dependent beam forming or beam selection may either be done digitally in the digital baseband domain or analogous / mechanically.

One possible analog or mechanical approach may be to select between different directional antennas, each having a different beam pattern, depending on the radio resource subset under consideration. The antenna selection may, for example, be performed via a mechanical or electrical switch. For example, in this way first radio resources of the first radio resource subset may be associated to a different directional antenna than second radio resources of the second radio resource subset. For example, the two different directional antennas may provide different beam patterns pointing in different spatial (vertical and/or horizontal) directions.

Also, the beam forming or the beam selection may be performed horizontally, vertically or as a combination thereof. In some embodiments it is of particular interest to perform a vertical beam selection for the signal with the at least one antenna. Thereby, vertical selection in the context of the present invention shall be understood as choosing between at least two different overlapping or non-overlapping beam patterns, each having a different antenna pattern with a different downtilt angle of an associated main lobe. In other words, a first one of the at least two individual beam patterns may have a first main lobe with a different downtilt than a second main lobe of a second one of the at least two individual beam patterns.

Hence, according to some embodiments the different antennas may have or cause different downtilts, i.e. an inclination angle towards ground may be different. In this way the first radio resource subset may have associated therewith a first downtilt, wherein the second radio resource subset may have associated therewith a second downtilt, which is different from the first downtilt. As a result of the different downtilts, the first radio resource subset specific beam pattern may cause a different antenna gain at the cell's border than the second radio resource subset specific beam pattern. Hence, the processor may be operable to determine the radio resource subset specific beam patterns, such that the first radio resource subset specific beam pattern has a different antenna gain at the radio cell's border than the second radio resource subset specific beam pattern, which may be achieved by selecting or forming different downtilts for the first and second radio resource subset specific beam patterns. Note, that embodiments may also address the horizontal domain, i.e., the first radio resource subset specific beam pattern may in general have a different horizontal and/or vertical characteristic than the second radio resource subset specific beam pattern

Embodiments also provide an apparatus for digitally determining the beam pattern of an antenna array, wherein the antenna array comprises at least two antenna elements, which are coupled to at least two signal branches of a digital baseband signal as the common cell-specific signal. Hence, the at least two antenna elements may be formed or comprised by an antenna array. The (common) signal in this case is a digital baseband signal associated to a plurality of users being served by the same cell of the cellular communication system via the antenna array. The apparatus may further comprise an interface for the digital baseband signal, wherein the digital baseband signal uses or comprises at least the first and the second radio resource subset, wherein the interface may be a digital baseband interface (e.g. CPRI) being operable to receive and/or transmit the digital baseband signal from or to a modulator-demodulator (modem) device. Further, the processor may be operable to determine, for each of the first and the second radio resource subset, a radio resource subset specific beam forming vector, such that first radio resource subset specific beam pattern of the antenna array corresponding to a first beam forming vector associated to the first radio resource subset is different from a second radio resource subset specific beam pattern of the antenna array corresponding to a second beam forming vector associated to the second radio resource subset.

The antenna array may principally be an arbitrarily arranged antenna array comprising a plurality of spatially arranged and electrically interconnected co-polarized antennas or antenna elements to produce a directional radiation or beam pattern. Thereby, the individual antenna elements may be arranged one-dimensional, e.g. as a linear vertical or horizontal antenna array, two-dimensional as a planar antenna array, or even three-dimensional. An inter-antenna-element spacing may be in the range of *λ*/2, for example.

The processor may be operable to apply a (pre-) determined first radio resource subset specific beam forming vector, which corresponds to the first radio resource subset, to a first part of the digital baseband signal using the first radio resource subset. Likewise, the processor may be operable to apply a (pre-) determined second radio resource subset specific beam forming vector, which corresponds to the second radio resource subset, to a second part of the digital baseband signal using the second radio resource subset.

In order to determine the radio resource subset specific beam forming vectors the processor may, for example, be coupled to a memory device and may be operable to determine the radio resource subset specific beam forming vector for one of the first and/or the second radio resource subset by means of a table lookup in the memory device storing predetermined radio resource subset specific beam forming vectors (or coefficients thereof) for both of the first or the second radio resource subsets. In other embodiments the processor may also be operable to determine the radio resource subset specific beam forming vector for the first and/or the second radio resource subset based on a radio resource subset specific manipulation of a radio resource subset independent beam forming vector, for example, by means of real-time weight coefficient computations or settings. This may be advantageous for non-stationary (i.e. changing) user distributions within the cell.

Embodiments of the present invention may particularly be employed for uplink and/or downlink communication in various communication systems. "Uplink" refers to the communication direction from a mobile terminal to a base station of a wireless communication system and the "downlink" refers to the communication direction from the base station to the mobile terminal. The wireless or cellular communication system may, for example, correspond to one of the wireless communication systems standardized by 3GPP, as Universal Terrestrial Radio Access Network (UTRAN) or Evolved UTRAN (E-UTRAN), Long Term Evolution (LTE) or LTE-Advanced (LTE-A), or wireless communication systems with different standards, e.g. Worldwide Interoperability for Microwave Access (WIMAX) IEEE 802.16 or Wireless Local Area Network (WLAN) IEEE 802.11, generally any system based on Orthogonal Frequency Division Multiple Access (OFDMA), Single Carrier Frequency Division Multiple Access (SC-FDMA) Code Division Multiple Access (CDMA), etc. In the following the terms wireless communication system and cellular communication network are used synonymously.

In some embodiments, the at least two antenna elements, which may also be antenna elements of an antenna array, may be coupled to a mobile terminal and the apparatus for determining the radio resource specific beam pattern may be implemented in the mobile terminal, which forms the mobile or wireless end of one of the above networks. The mobile terminal may be a smartphone, a cell phone, a User Equipment (UE), a laptop, a notebook, a personal computer, a Personal Digital Assistant (PDA), a Universal Serial Bus (USB) -stick, a car, etc. A mobile terminal may also be referred to as UE in line with the 3GPP terminology.

In other embodiments, the at least two antenna elements or the antenna array may be directly or indirectly coupled to a base station and the apparatus for determining the radio resource specific beam pattern may be, for example as a Radio Equipment (RE) entity, implemented in or coupled to the base station. A base station may correspond to a remote radio head, an access point, a macro-cell, a small-cell, a micro-cell, a femto-cell, etc. A base station transceiver can be a wireless interface of a wired network, which enables transmission of radio signals to a user equipment or mobile transceiver. Such a radio signal may comply with radio signals as, for example, standardized by 3GPP or, generally, in line with one or more of the above listed systems. Thus, a base station may correspond to a NodeB, an eNodeB, an access point, etc.

Although some embodiments may be used to advantage in various communication systems, such as 2^{nd} Generation (2G) systems, such as GSM/EDGE, or 3G systems, such as UMTS, other embodiments relate to 4G systems, such as LTE, for example. More generally, some embodiments relate to Orthogonal Frequency Division Multiplexing (OFDM) and/or SC-FDMA based communication systems. In such systems the radio resource set of the common cell-specific signal may be regarded as a set a subcarriers or subcarrier frequencies employed in an OFDM-based system to serve a plurality of users of a radio cell. In such embodiments the set of subcarriers comprises at least a first subcarrier subset and a second subcarrier subset, wherein the apparatus' processor is operable to determine, for each of the first and the second subcarrier subset, a subcarrier subset specific beam pattern. That is to say, for OFDM-based systems the processor may be operable to determine, for each of the first and the second subcarrier subset, a subcarrier subset specific beam pattern of the at least one antenna, such that a first subcarrier subset specific beam pattern corresponding to the first subcarrier subset is different from a second sub-carrier subset specific beam pattern corresponding to the second subcarrier subset. Even more generally, embodiments may relate to Frequency Division Multiplexing (FDM) base systems. A CDMA or FDM signal uses or occupies a set of frequencies within a useful signal bandwidth of the signal. The set of frequencies comprises at least a first frequency subset and a second frequency subset, wherein the first frequency subset and the second frequency subset each comprises at least one frequency component. The processor may hence be operable to determine, for each of the first and the second frequency subset, a frequency subset specific beam pattern. More particularly, the processor may hence be operable to determine, for each of the first and the second frequency component, a frequency component specific beam pattern. As described above, the frequency or subcarrier subset specific beam patterns may either be determined by selecting beam patterns of individual directional antennas or by (digitally) forming a subcarrier subset specific beam pattern of an antenna array by means of applying subcarrier subset specific beam forming weights to signal branches of the cell-specific signal. In the latter case, the processor may hence be operable to determine, for each of the first and the second sub-carrier subset, a subcarrier subset specific beam forming vector comprising, for each of the at least two signal branches of the cell-specific signal, a subcarrier subset specific beam forming coefficient corresponding to a subcarrier subset specific beam pattern of the antenna array. In some embodiments the first subcarrier subset and the second sub-carrier subset each comprise a single subcarrier, respectively, wherein the two single subcarriers are different from each other. The processor may then be operable to determine, for each of the first and the second single subcarrier, a subcarrier specific beam forming vector comprising, for each of at least two signal branches associated to the at least two antenna elements, a subcarrier specific beam forming coefficient corresponding to a subcarrier specific beam pattern of the antenna array.

For example, in order to steer the downtilt of the antenna array's beam pattern, the processor may be operable to determine the subcarrier subset specific beam forming vector for one of the first or the second subcarrier subset based on a subcarrier subset specific and signal branch specific phase shift of beam forming coefficients of a subcarrier subset independent beam forming vector, i.e., *wₐ*(*f)* = wₐ*e^{j*ϕa*(*f*)}, wherein *wₐ*(*f*) denotes the frequency or subcarrier subset specific beam forming coefficient a signal branch *a* (*a* = 1, 2, ... *A*), *w*ₐ denotes the frequency or subcarrier subset independent beam forming coefficient of signal branch *a,* and *ϕₐ*(*f*) denotes the frequency or subcarrier subset specific phase shift of signal branch *a.*

For a OFDM-based or SC-FDMA-based system, such as LTE, for example, embodiments hence allow complex beam forming weights to be a function of the frequency over the user bandwidth (e.g. 4.5/9.0/18.0 MHz) within one LTE band, i.e. *w*ₐ = *w*ₐ(*f*) (*a* = [0, 1, ..., *A*-1]), where *f* is indicative of the frequency or subcarrier. With this concept, various advantages are possible and system behaviors may be achieved that are otherwise impossible, by realizing new beam shapes or making the beam shapes (e.g. beam directions) dependent on the subcarrier (frequency). All this may open up a new set of applications and means of improvements for adaptive antenna arrays (AAA). The frequency-(or subcarrier-) dependency may be implemented in the digital baseband of the AAA apparatus and can be realized either in frequency domain (by FFT→complex multiplications→IFFT) or in the time domain (by FIR filters).

For performing the frequency dependent or independent beam forming in the frequency domain the processor for determining the radio resource subset specific beam pattern may be arranged between a Fast Fourier Transform (FFT) processor and an Inverse Fast Fourier Transform (IFFT) processor to determine and/or apply the subcarrier subset specific beam forming vector to the cell-specific signal in the frequency domain.

When performing frequency dependent or independent beam forming for an OFDM data symbol in the frequency domain, it might be necessary to have knowledge on OFDM symbol boundaries. For this purpose, the processor for determining the radio resource subset specific beam pattern may be operable to detect OFDM symbol boundaries of data symbols of a data stream input to the processor to apply the subcarrier subset specific weighting coefficient for each of the at least two antenna- or PA-specific signal branches *a* = [0, 1, ..., *A*-1] to the cell-specific data stream on an OFDM symbol basis. The detection of OFDM symbol boundaries may, however, require additional signaling from a REC entity or modem device coupled to the beam forming or beam selection processor (RE entity).

In order to avoid such additional signaling it may be advantageous to perform the subcarrier subset specific beam forming in the time domain, for example, by using Finite Impulse Response (FIR) filters. The processor for determining the radio resource subset specific beam pattern may hence comprise, for at least one of the signal branches coupled to the antenna array, at least one Finite Impulse Response (FIR) filter structure, to realize a signal branch specific and subcarrier subset dependent delay of the digital baseband signal corresponding to the subcarrier subset in order to realize a subcarrier subset specific beam forming coefficient corresponding to a subcarrier resource subset specific beam pattern of the antenna array in the time domain. In some embodiments, FIR filters, which are typically already available for calibrating the signal branches to the antenna elements, may additionally be used for determining the frequency or subcarrier subset specific weighting coefficients. In other words, the at least one FIR filter structure associated to one of the at least two signal branches may be operable, besides determining the subcarrier subset specific weighting coefficients for a signal branch, to calibrate said signal branch and/or an antenna element associated to the one of the at least two signal branches.

The time domain approach may be preferable for some embodiments because it works independently from OFDM symbol boundaries. In the time domain approach the FIR filter coefficients may either be real-valued (typically realizing a linear dependency between subcarrier index and beam direction) or complex-valued (typically realizing an arbitrary dependency between subcarrier index and beam direction/beam shape). Another advantage of the time domain implementation is that an AAA product typically contains FIR filters in the digital baseband anyway, for the purpose of antenna calibration. These FIR filters can fully or partly be re-used for the purpose of frequency-specific beam forming.

Advantageously, embodiments of the present invention may be used for improving Inter-Cell Interference Coordination (ICIC). For that purpose, according to a further aspect of the present invention it is provided a cellular communication system comprising a first base station serving a first cell, the first base station comprising a first apparatus for determining a radio resource subset specific beam pattern, wherein the first apparatus is associated to at least two first antenna elements. Further, the cellular communication system comprises a second base station serving a second cell neighboring the first cell, the second base station comprising a second apparatus for determining a radio resource subset specific beam pattern, wherein the second apparatus is associated to at least two second antenna elements. A first mapping between at least two radio resource subsets of the first base station and at least two radio resource subset specific beam patterns of the at least two first antenna elements is thereby different from a second mapping between at least two radio resource subsets of the second base station and the at least two radio resource subset specific beam patterns of the at least two second antenna elements, such that an inter-cell interference between the first cell and the second cell is reduced. For example, identical radio resource subsets of the first and second cell may be associated to first and second radio resource subset specific beam patterns of the first and second cell, wherein the first and second beam patterns do essentially not spatially overlap.

According to yet a further aspect it is provided a method for determining a beam pattern of at least two antenna elements, wherein the at least two antenna elements are associated to or feedable with a cell-specific signal using radio resources of a cell-specific radio resource set. The cell-specific radio resource set comprises at least a first radio resource subset associated to a first plurality of users and a second radio resource subset associated to a second plurality of users of a cellular communication system. Thereby, the first and the second plurality of users are both associated to the same cell of the cellular communication system. The method comprises a step of determining, for each of the first and the second radio resource subset, a radio resource subset specific beam pattern of the at least two antenna elements, such that a first radio resource subset specific beam pattern corresponding to the first radio resource subset is different from a second radio resource subset specific beam pattern corresponding to the second radio resource subset.

Some embodiments comprise electrical analog and/or digital control circuitry installed within the apparatus for performing the method, i.e. the apparatus for determining the beam pattern. Digital control circuitry, e.g. a Digital Signal Processor (DSP) or a Field Programmable Gate Array (FPGA), needs to be programmed accordingly. Hence, yet further embodiments also provide a computer program having a program code for performing embodiments of the method, when the computer program is executed on a computer or a digital processor.

Embodiments of the present invention may further improve the beam shape effective for each user (subset). This is expected to be particularly beneficial in uplink for capacity and certain coverage improvements. One benefit of embodiments comes with the implicit cooperation of the apparatus for determining the radio resource specific beam pattern with an associated Layer-2 (L2) scheduler. It may be assumed that an LTE Layer-2 scheduler in the modem-board / base station has anyway implemented means for frequency selective or dependent scheduling, since this is a basic concept since the beginning of the LTE standard. Now, in cooperation with embodiments of the present invention the L2 scheduler may automatically, for each user, select those frequency (subcarrier) regions, and thereby beam directions or beam shapes, which match best the location of the respective mobile user.

Hence, embodiments may generate benefits in terms of cell capacity and coverage with no or minimum changes of an eNodeB Modem/L2 software and without increasing the number of CPRIs, while still being able to exploit the spatial (e.g. vertical) domain.

### Brief description of the Figures

Some embodiments of apparatuses and/or methods will be described in the following by way of example only, and with reference to the accompanying figures, in which
- Fig. 1: shows a conventional Adaptive Antenna Array entity interfacing a base station modem board via a single CPRI interface;
- Fig. 2a,b: show a conventional cell specific beam forming concept single main lobe beam patterns;
- Fig. 2c: shows a conventional vertical sectorization beam forming concept for two cell specific baseband signals, each having associated a conventional single main lobe beam pattern;
- Fig. 3: shows an embodiment of an apparatus for determining a radio resource subset specific beam pattern of at least two antenna elements;
- Fig. 4: shows an embodiment of an apparatus for determining/forming a radio resource subset specific beam pattern of an antenna array;
- Fig. 5: shows examples of linear and nonlinear relationships between a subcarrier index and a subcarrier specific spatial beam direction;
- Fig. 6: shows examples of linear and nonlinear relationships between a subcarrier index and a subcarrier specific beam width or beam shape; and
- Fig. 7: shows an embodiment of an apparatus for determining/forming a radio resource subset specific beam pattern of an antenna array in the time domain.

### Description of Embodiments

Various example embodiments will now be described more fully with reference to the accompanying figures in which some example embodiments are illustrated. In the figures, the thicknesses of lines, layers and/or regions may be exaggerated for clarity.

For the sake of conciseness please note that some embodiments will be explained by the downlink, keeping in mind that all embodiments are also applicable for the uplink as well. Further, sometimes only the vertical beam forming case will be exemplified, keeping in mind that all embodiments are applicable for the horizontal direction as well.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g*., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

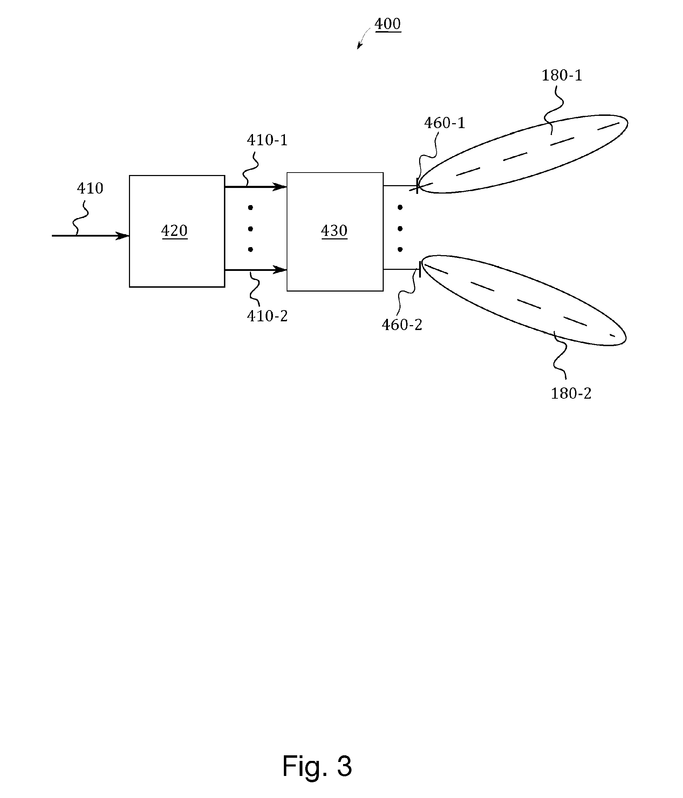

Fig. 3 schematically illustrates an apparatus 400 for determining a radio resource specific beam pattern of at least two antenna elements 460-1, 460-2. The at least two antenna elements 460-1, 460-2 both are feedable with or associated to an analog or digital signal 410. That is to say, the signal 410 may be radiated via at least one of the two antennas 460-1, 460-2 or via both of the two antennas 460-1, 460-2. The signal 410 makes use of radio resources of a radio resource set comprised in a useful bandwidth *f_{BW}* of the signal 410. The radio resource set of the signal 410 comprises at least a first radio resource subset which is associated to a first plurality of users of a cellular communication system. Further, the radio resource set of signal 410 comprises a second radio resource subset associated to a second plurality of users of the cellular communication system. The first and the second plurality of users are thereby both associated to the same radio cell of a cellular the communication system. In other words, the digital or analog signal 410 may be divided into at least a first signal part 410-1 associated to the first subset of radio resources and a second signal part 410-2 being associated to the second subset of radio resources. The subdivision of the signal 410 into the plurality of signal subsets or parts may, for example, be performed with an optional adequate signal splitter 420. The signal 410 and the signal parts 410-1, 410-2 thereof are both associated to the same cell-ID.

Further, the apparatus 400 comprises a processor 430 which is operable to determine or apply, for each of the at least first and second radio resource subset of the signal 410, a radio resource subset specific beam pattern 180-1, 180-2 of the at least one of the at least two antenna elements 460-1, 460-2, such that a first radio resource subset specific beam pattern 180-1 corresponding to the first radio resource subset 410-1 is different from a second radio resource subset specific beam pattern 180-2 corresponding to the second radio resource subset 410-2 of signal 410. In other words, the processor 430 may map a radio resource subset specific signal part 410-1, 410-2 of the signal 410 to a radio resource subset specific beam pattern 180-1, 180-2, respectively, which may be generated by means of the at least two antenna elements 460-1, 460-2. Note, that the entities 420 and 430 are shown as separate entities only for illustrative purposes. The functionalities of both blocks may as well be implemented in one processor entity, as, e.g., in the processor 430.

As mentioned before, the signal 410 may be a cell-specific analog or digital signal comprising signal components of a plurality of users served by the same radio cell. Thereby different users of the plurality of users are assigned to different radio resources, such as frequencies, time slots, or spreading codes, for example. The cell-specific signal 410 may be provided to the apparatus 400, which may e.g. be a RE entity, by means of a signal interface. This interface may, in the case of the signal 410 being a digital baseband signal, be a digital baseband interface according to the Common Public Radio Interface (CPRI) standard.

The individual antenna elements 460-1, 460-2 may correspond to individual directional antennas, each providing an individual beam pattern pointing into a different spatial direction compared to a beam pattern of another directional antenna. For such embodiments the processor 430 may provide a mapping between the radio resource specific signal components 410-1, 410-2 corresponding to the different radio resource subsets and at least one of the individual directional antenna elements 460-1, 460-2. In such embodiments a number *S* of radio resource subsets comprised by the signal 410 may correspond to the number of individual directional antennas *Nₑₗₑₘ,* i.e., *S = Nₑₗₑₘ.*

Also, embodiments are not limited to vertical beam forming or beam steering applications and may as well be applied for horizontal beam forming or beam steering purposes, since both may be of particular interest for decreasing inter-cell interference. Hence, the processor 430 may be operable to determine the at least two radio resource subset specific beam patterns 180-1, 180-2, such that the first radio resource subset specific beam pattern 180-1 has a different antenna gain at the radio cell's border region and then the second radio resource subset specific beam pattern 180-2. This may, for example, be achieved by equipping the first radio resource subset specific beam pattern 180-1 with a different downtilt than the second radio resource subset specific beam pattern 180-2.

In case embodiments of the present invention are applied to WCDMA scenarios, the first and the second radio resource subsets may correspond to first and second spreading code subsets associated to first and second pluralities of users of the same cell. Hence, users of the first spreading code group may be served by a first spreading code subset specific beam 180-1, while users of a second code spreading group may be served by at a second spreading code subset specific antenna beam 180-2.

Embodiments of the present invention are also applicable to OFDM-based communication systems, like, e.g., LTE. In such a case the signal 410 is an OFDM or SC-FDMA signal comprising or using a full set of subcarriers within a useful signal bandwidth *f_{BW}* of the OFDM signal, wherein the full set of subcarriers comprises at least a first subset of subcarriers and second subset of subcarriers. Hence, for an OFDM-scenario the processor 430 may be operable to determine, for each of the first and the second subcarrier subset of the OFDM-signal 410, a subcarrier subset specific beam pattern.

Although the radio resource specific beam forming or -steering may principally be achieved by associating different directional antennas to different radio resource subsets, it may be preferable to form the at least two radio resource specific beam patterns 180-1, 180-2 by means of digital beam forming in the baseband domain. In this case the at least two antenna elements 460-1, 460-2 form an antenna array 160 comprising a plurality of closely-spaced, correlated, and co-polarized antenna elements, which has already been described before. The at least two different radio resource specific beams 180-1, 180-2 may then be formed by applying radio resource subset specific beam forming vectors **w*ₛ*** (*s* = 1, 2, ..., *S*) to the corresponding radio resource subset specific signal parts 410-*s* (*s* = 1, 2, ..., *S*)*.*

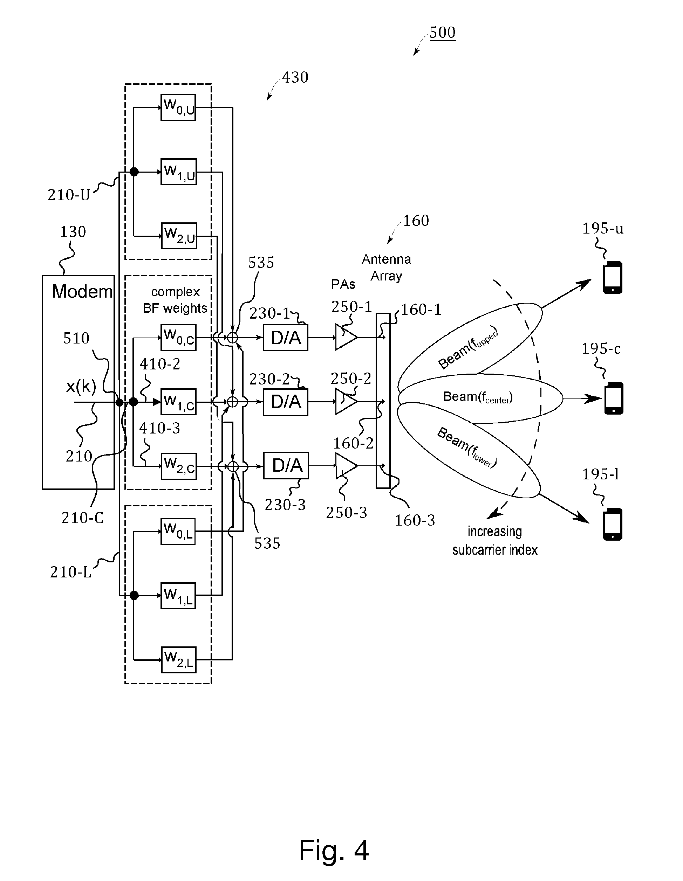

An apparatus 500 for determining a radio resource subset specific antenna beam by digital beam forming is schematically shown in Fig. 4. Note that like reference numerals denote identical or similar entities.

The apparatus 500 comprises an interface 510, in particular a CPRI, for a cell-specific digital baseband signal 210, which comprises at least the first and the second radio resource subset, wherein the first radio resource subset is associated to first users and wherein the second radio resource subset is associated to second users. Here, the processor 430 is operable to determine, for each of the first and the second radio resource subset of the digital baseband signal, a radio resource subset specific beam forming vector **w*ₛ*** (*s* = 1, 2, ..., *S*), such that a first radio resource subset specific beam pattern of the antenna array 160 corresponding to a first beam forming vector associated to the first radio resource subset is different from a second radio resource subset specific beam pattern of the antenna array 160 corresponding to a second beam forming vector associated to the second radio resource subset. In other words, the radio resource subset specific beam forming vectors which are applied to different radio resource subsets are different from each other. Hence, generally the processor 430 may be operable to apply a (pre-) determined first radio resource subset specific beam forming vector **w₁**, which corresponds to the first radio resource subset, to a first part 210-1 of the digital baseband signal 210 comprising or using the first radio resource subset, and to apply a (pre-) determined second radio resource subset specific beam forming vector **w₂**, which corresponds to the second radio resource subset, to a second part 210-2 of the digital baseband signal 210, the second part 210-2 using the second radio resource subset.

Fig. 4 exemplarily illustrates an embodiment, where the digital baseband signal 210 is an OFDM-based signal comprising or being made up of a complete set of subcarriers. This full set of subcarriers may exemplarily be divided into three subcarrier subsets *u* (upper), *c* (center), *l* (lower), wherein a first subcarrier subset *u* is associated to an upper frequency or subcarrier region of the signal bandwidth, a second subcarrier subset *c* is associated to a center region of the system bandwidth, and a third subcarrier subset *l* is associated to a lower frequency or subcarrier region of the OFDM signal 210. Note that each subcarrier subset comprises one or more subcarrier frequencies of the OFDM signal 210. According to Fig. 4 a first signal part 210-*u* comprising the upper subcarriers is weighted with an upper subcarrier specific beam forming vector **w*ᵤ*** = [*w*_{0,*u*} w_{1,*u*} w_{2,*u*}]^{T}. A second signal part 210-c comprising the center subcarriers of signal 210 is weighted with a complex-valued center subcarrier subset specific beam forming vector **w*_{c}*** = [*w*_{0,*c*} w_{1,}*_{c} w*_{2,*c*}]^{T}. Further, a third signal part 210-*l* comprising the lower frequencies or subcarriers of signal 210 is weighted with a lower subcarrier subset specific informing vector **w*ₗ*** = [*w*_{0,}*ₗ w*_{1,*l*} w_{2,*l*}]^{T} . The resulting weighted signal parts are superimposed by means of signal branch specific adders 535 before the resulting superimposed or compensated weighted signals are digital-to-analog converted by DACs 230-*a* (*a* = 1, 2, ... , A), amplified by PA's 250-*a* (*a* = 1, 2, ... , A) and then coupled to the antenna array 160. This results in the signal components 210-*u*, 210-c, and 210-*l* being radiated via signal component or subcarrier subset specific beams 180-*u*, 180-c, and 180-*l* to end-users 195-*u*, 195-c, and 195-*l* which may be scheduled by a L2 scheduler at the respective upper, center, and lower radio resources (subcarriers), respectively.

Hence, particular benefits of embodiments come with the implicit cooperation of the Layer 2 scheduler. We assume that the Layer 2 scheduler in the modem board/base station 130 has anyway implemented means of frequency or subcarrier selective scheduling, since this is a basic concept since the beginning of the LTE standard. Now, in cooperation with apparatus 500 implemented according to an embodiment of the present invention, the L2 scheduler will automatically for each user 195-*u*, 195-c, and 195-*l* select those frequency or subcarrier regions *u, c*, and *l*, and thereby beam directions or beam shapes 180-*u*, 180-c, and 180-*l*, that match best the location of the respective mobile user 195-*u*, 195-c, and 195-*l*.

In the uplink (UL) the scheduler may evaluate Sounding Reference Signals (SRS), for example, according to the LTE standard, for deciding for the frequency regions *u, c*, and *l* where to schedule the user for UL data transmission. Therefore, with this scheme the scheduler may implicitly select the most suitable beam 180-*u*, 180-c, or 180-*l* and may therefore achieve a much better link budget than with a conventional static beam, which can never be optimized for all users of the cell at the same time. For the UL embodiments are well applicable already for LTE Rel-8. However, care has to be taken that in the frequency region where the Physical Random Access Channel (PRACH) is transmitted, the beam pattern provides sufficient coverage over the complete cell. An example of a good solution for treating the RACH is to allocate the RACH resources (frequencies) to the upper end of the band that corresponds to a lower downtilt (=upper beam). This yields no degradation in terms of RACH coverage compared to prior-art deployments, where typically the complete cell has a narrow beam that has a rather low downtilt to reach the cell edge users. Similarly, the lower end of the band could also be mapped to the low downtilt, because the Physical Uplink Control Channel (PUCCH) (the other UL channel that has fixed allocation that cannot be changed by the L2 scheduler) is fixedly allocated to the upper and lower edge of the band according to the standard, and a hopping scheme is done. Also other well-designed functions of beam "directions versus frequency" are possible, to take best advantage of the given PUCCH allocation and hopping scheme. That is to say, the Physical Uplink Control Channel (PUCCH), carrying control data like ACK/NACK or Channel State Information (CSI) reports, may be allocated to outer and inner part of the ban,. A frequency location for the Physical Random Access Channel (PRACH) may be configured by a network operator, and is then fixed in a given cell. A frequency location of the Physical Uplink Shared Channel (PUSCH), which carries the UL user data, may be decided by L2 (i.e. by a normal frequency selective scheduler that evaluates the Sounding Reference Signal (SRS), which is send over the complete band in UL, by the user, so that the eNodeB learns about the UL channel of each user.

In the downlink (DL) the scheduler may evaluate the narrow-band Channel Quality Indicator (CQI) information signaled by the UE's 195-*u*, 195-c, and 195-*l*. The rest works in quite the same way as described for the uplink. Note, that in DL this concept may be applied to all LTE DL bands of a cell, or only to the LTE band associated to an extension carrier of the "carrier aggregation" feature of LTE Rel-10.

For obtaining the radio resource subset specific weights *w_{a,s}* (*s* = *u, c*, *l; a* = 0, 1, ... *A*-1) of the beam forming vectors **w*ₛ*** (*s* = *u, c*, *l*) the processor 430 may, according to some embodiments, be coupled to a memory device. In this way the processor 430 may be operable to determine the radio resource subset specific beam forming vectors **w*ₛ*** (*s* = *u,* c, *l*) by means of a table lookup in the memory device, which is storing predetermined (i.e. fixed) radio resource subset specific beam forming vectors **w*ₛ*** (*s* = *u, c*, *l*) for the upper, center, and lower subcarrier subsets. Further, it may be advantageous to determine the radio resource subset specific beam forming vectors for one of the first or the second radio resource subsets based on the radio resource subset specific manipulation of a radio resource subset independent beam forming vector. For example, a radio resource subset independent beam forming vector **w₀**, i.e. the signal branch specific coefficients thereof, may be combined or multiplied with a radio resource subset specific and signal branch specific phase rotation term e^{j*ϕs,a*} (*ϕ_{s,a}* = [0, 2π]; *s* = *u, c*, *l; a* = 1, 2, 3, ... , *A*) in order to obtain the different beam forming patterns 180-*u*, 180-c, and 180-*l* pointing in different spatial directions.

In some embodiments the function "beam shape versus frequency" may be assumed to be configured once, e.g. by an AAA apparatus' Operations, Administration, and Maintenance (OAM), and then remains static. This is fine when the users in the cell are distributed sufficiently evenly, such that each frequency (i.e. each beam) can be used to serve some users in a reasonable or advantageous way. However, if the spatial distributions of the active users change over time, some frequencies may remain unused, because no user is located in the associated spatial region. Therefore, an adaptability of the function "beam shape vs. frequency" over time may be desirable for some embodiments.

In some embodiments a function may be added inside the Layer 2 (scheduler) function of the base station (eNodeB), that collects medium- to long-term statistics (e.g. averaged over time intervals of 100ms to few seconds, minutes, hours or even days) concerning the preferred frequency or subcarrier regions of the users, according to their CQI reports (DL) or according to the SRS measurements (UL). Depending on the evaluation of these statistics, the Layer 2 may initiate a message to the AAA entity 500 to request (or command) it to change its function "beam shape vs. frequency" in a certain way. By this mechanism it may be ensured that at any time the frequency-dependent beams 180-*u*, 180-c, and 180-*l* are always configured appropriately, such that they point to directions (or are having shapes) that are useful and advantageous for covering the users in the cell. The way how this signaling is established in detail can be manifold. For example, a (low-speed) communication link between eNodeB 130 and AAA apparatus 500 may be established that enables eNodeB 130 to influence or control the AAA apparatus's function "beam shape vs. frequency". Hence, the AAA apparatus 500 or the processor 430 thereof may be operable to adapt a mapping between a radio resource subset (*u*; *c*; *l*) and an associated radio resource subset specific beam forming vector (**w*ᵤ***; **w*_{c}***; **w*ₗ***) in accordance to a reported user distribution in the cell of the cellular communication system, wherein the user distribution may directly or indirectly be reported to the apparatus by a Layer-2 scheduler. The user distribution may comprise an index of a list of previously stored radio resource specific functions (such as beampatterns or FIR coefficients), for example. The feature can run independently in DL and UL. Such a change of the function "beam shape vs. frequency" implies that the AAA may reload new radio resource subset specific beam forming vectors **w*ₛ*** (*s* = *u, c*, *l*) or new FIR coefficients, which will become clear in the sequel.

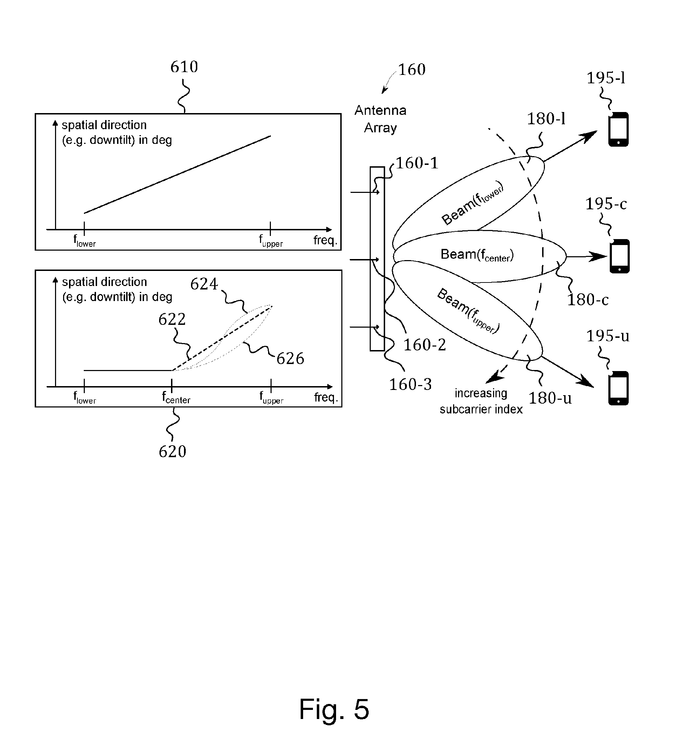

Fig. 5 schematically illustrates some possibilities for a mapping of frequency subcarriers and spatial beam directions, as, e.g., a downtilt, of an associated frequency or subcarrier specific beam pattern.

Diagram/chart 610 shows an exemplary linear dependency between a frequency subcarrier and the associated beam pattern downtilt. In this exemplary case a low subcarrier frequency yields a low downtilt, whereas a high subcarrier frequency yields a subcarrier specific beam pattern with a high downtilt. This is illustrated by the exemplary beam patterns 180-*u*, 180-c, and 180-*l* on the right-hand side of Fig. 5. In this linear case the phase rotation term e^{j*ϕs,a*} (*ϕ_{s,a}* = [0, 2π]; *s* = *u, c, l; a* = 1, 2, ..., A), or the phase argument *ϕ_{s,a}* thereof, may be chosen directly proportional to the frequency or subcarrier *f*, i.e., *ϕ_{s,a}* = const. **f*.

Diagram/chart 620 illustrates different relationships between subcarrier frequencies and resulting spatial directions or downtilts of the antenna beams 180-*u*, 180-c, and 180-*l*. While the same low downtilt may be employed for a subcarrier frequency region from *f*_{lower} to *f*_{center}, a relationship between the subcarrier frequency *f* and the resulting downtilt may be linear (see reference numeral 622) or nonlinear (see reference numerals 624, 626) for a subcarrier frequency region from *f*_{center} to *f*ᵤₚₚₑᵣ.

While the linear relationship of diagram 610 may be realized in the time domain with real FIR filter coefficients, the nonlinear subcarrier-versus-downtilt relations of diagram 620 require complex FIR filter coefficients. All we need to do is to define the weight coefficients versus frequency and convert this to time domain to get the necessary FIR coefficients. This may be done via well-known mathematical operations, such as, e.g., the (inverse) Fourier transform.

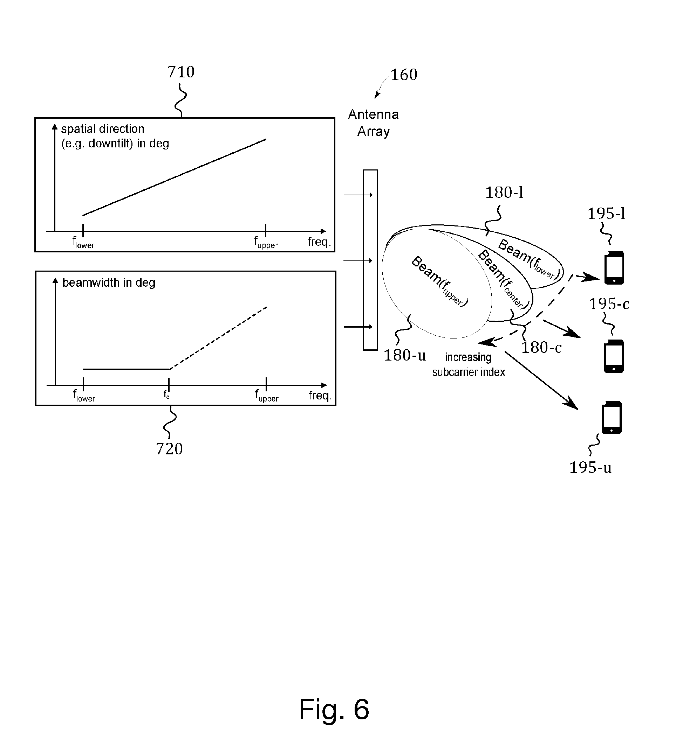

Turning now to Fig. 6, it is illustrated that not only the direction of an antenna beam's main lobe may be dependent on a radio resource subset, but also the form/shape or the width of the main lobe or the resulting beam 180-*u*, 180-c, or 180-*l*. Fig. 6 exemplarily illustrates an embodiment where not only the downtilt but also the beam width increases linearly or nonlinearity (see diagram 720) with increasing subcarrier frequency index *f.*

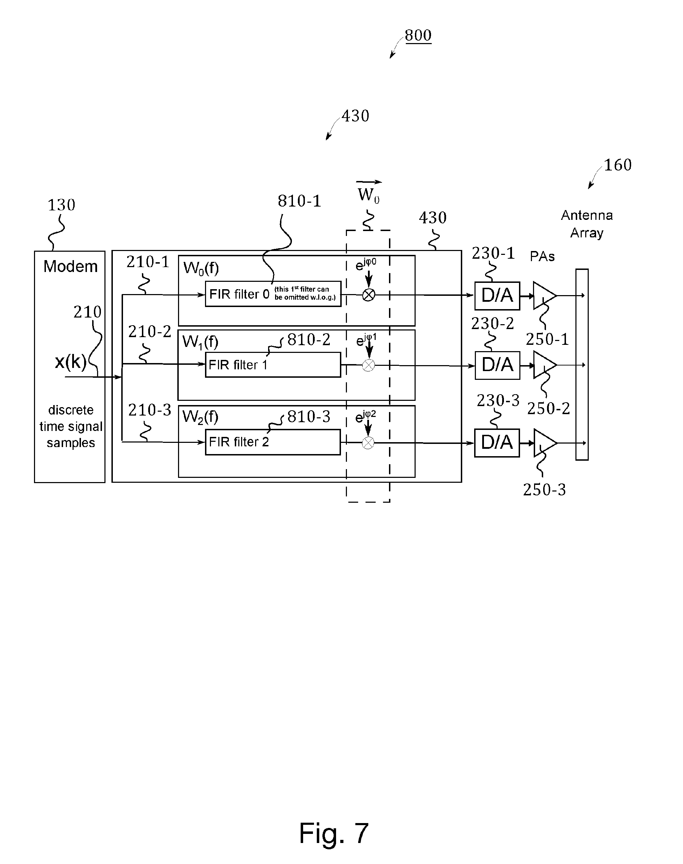

Fig. 7 schematically shows a block diagram of an apparatus 800 for determining or realizing a subcarrier specific beam pattern of an antenna array 160. Exemplarily the antenna array 160 comprises three vertically arranged antenna elements 160-1, 160-2, and 160-3 that are coupled to three power amplifiers. Each power amplifier is coupled to one of the signal branches 210-1, 210-2, and 210-3 of the OFDM-or SC-FDMA-based digital baseband signal 210. Thereby each signal branch 210-1, 210-2, and 210-3 is associated to one antenna element 160-1, 160-2, and 160-3 of the antenna array 160. Each of the signal branches 210-1, 210-2, and 210-3 is weighted with a signal branch specific weighting coefficient e^{jϕ0}, e^{jϕ1} and e^{jϕ2}, which is frequency or subcarrier independent and needed for real-valued FIR coefficients, because otherwise it can be included in the anyway complex-valued FIR coefficients and no extra multiplication is needed. Together the three signal branch specific and subcarrier independent weighting coefficients e^{jϕ0}, e^{jϕ1}, and e^{jϕ2} form a subcarrier independent beam forming vector **w₀**. In order to realize frequency or subcarrier dependent beam forming vectors **w*ₛ*** (*s* = *u, c*, *l*) and, hence, subcarrier dependent beam patterns 180-*u*, 180-c, or 180-*l* of the antenna array 160, the processor 430 may comprise signal branch specific FIR filters 810-1, 810-2, and 810-3. For each of the three signal branches 210-1 to 210-3, the respective FIR filters 810-1, 810-2, and 810-3 realize frequency dependent or frequency selective signal paths through the processor 430, respectively. The frequency selective signal paths of the FIR filters 810-1, 810-2, and 810-3 each have a different impact on different spectral components (e.g., *u*, *c*, *l*) of the digital baseband signal 210. As a result, the different spectral components (for example lower, center, and upper subcarrier regions) are weighted with a different beam forming vector **w*ₛ*** (*s* = *u, c*, *l*) leading to a different spatial beam pattern 180-*u*, 180-c, or 180-*l* for the different spectral components. Note that, according to some embodiments, each individual subcarrier of the OFDM signal 210 may be regarded as a radio resource subset (serving a plurality of users at different time instants). Hence, each individual sub-carrier may be weighted with a subcarrier specific beam forming vector **w**(*f*) leading to a different spatial beam pattern for each subcarrier of the complete set of, e.g. 600, subcarriers within the signal bandwidth. That is to say, the first subcarrier subset and the second subcarrier subset may each comprise a single subcarrier, respectively. The processor 430 may in this case be operable to determine, for each of the first and the second single sub-carrier, a subcarrier specific beam pattern and/or beam forming vector comprising, for each of at least two signal branches associated to the at least two antenna elements, a subcarrier specific beam forming coefficient corresponding to a subcarrier specific beam pattern of the antenna array (160).

Also note that the FIR filter structures 810-1, 810-2, and 810-3 may advantageously each be operable, besides realizing a subcarrier subset specific beam forming coefficient of vector **w*ₛ*** (*s* = *u, c*, *l*), to calibrate or compensate the signal path to an associated antenna element 160-1, 160-2, or 160-3 associated to the respective signal branch 210-1, 210-2, and 210-3.

Hence, embodiments allow to realize the frequency-dependent beamforming weights wₐ(f) by mean of FIR-filtering the signal 210. With real FIR coefficients, a "linear phase ramp" of wₐ(f) can be achieved, which is fine if the beam shall sweep evenly over a certain directional range between lower and upper frequencies. To realize more complex functions of the beam direction versus frequency (e.g. for advanced adaptability to spatial traffic hotspots), complex FIR coefficients are needed to allocate more bandwidth to a certain spatial direction.

Another known technique that can be combined with embodiments of the present invention is a technique of so-called "angular sorting" for interference coordination between different LTE cells. This technique may also be used for the horizontal direction, therefore we take this use case now, contrary to the vertical direction that was considered before. In angular sorting, the idea is that cells are by design set up in a way that certain frequency regions inside the LTE band are preferably scheduled for beams pointing towards the left/center/right direction of the cell, respectively. If this scheme is configured in coordination between neighboring cells, the mutual interference created between cells can be reduced a lot, thus increasing cell capacity. In DL, the traditional angular sorting method is applicable only for LTE Rel-10 because it requires TM9 with user specific reference signals. In UL it is applicable generally, already in Rel-8. In either case, the Layer 2 scheduler function in the base station needs to be enhanced to implement the angular sorting scheme, i.e. there is a substantial base station software impact. With embodiments of the present invention a dependency between frequency and space (=beam direction or shape) may be realized by a AAA apparatus 400, 500, 800. Therefore, it is possible to realize performance gains from reduced interference due to "angular sorting" in DL and UL without modifications of the base station software, and again without extra CPRI lines necessary to explore the horizontal space.

Hence, embodiments also provide a cellular communication system, comprising a first base station serving a first cell, the first base station comprising a first apparatus for determining a radio resource specific beam pattern, the first apparatus being associated to at least two first antenna elements. Further, the cellular communication system comprises a second base station serving a second cell neighboring the first cell, the second base station comprising a second apparatus for determining a radio resource specific beam pattern, the second apparatus being being associated to at least two second antenna elements. Thereby a first mapping between at least two radio resource subsets of the first base station and at least two radio resource subset specific beam patterns of the at least two first antenna elements is different from a second mapping between at least two radio resource subsets of the second base station and the at least two radio resource subset specific beam patterns of at least two second antenna elements, such that an inter-cell interference between the first cell and the second cell is reduced. This may be achieved by choosing the first and second mappings such that beam patterns of the first and second cell and dedicated to the same radio resource subset *s* (*s* = *u, c*, *l*) do not spatially overlap each other.

To summarize, embodiments of the present invention allow that beams can be formed in a flexible and possibly adaptive way in vertical (or horizontal) direction, but at the same time it is not necessary to spend extra CPRI lines between eNodeB and AAA apparatus for exploring this vertical (or horizontal) domain. Instead, the normal capabilities of a frequency-selective scheduler may be exploited to map frequency to space and thereby explore the spatial dimension in a beneficial way.

It is possible to shape specific frequency-dependent beams by varying the beam forming weights with the subcarrier index → wₐ becomes *wₐ*(*f*). Implementation-wise this can be done either in frequency domain (FFT etc.), or by FIR-filtering the discrete time signal. Embodiments allow sweeping through spatial directions of the coverage area by sweeping through subcarriers. In one variant, the phase delta between weights *wₐ*(*f*) would be equidistant vs. subcarrier *f*, which means that this could be realized by means of FIR filters with real coefficients. For a more situation-dependent optimized function "beam_direction(f)", FIR filter coefficients may become complex. In some embodiments the function "beam_direction(f)" can be made slowly adaptive (e.g. on a seconds or minutes basis) to react to a changing traffic environment (Self-Optimizing Network (SON) mechanism between Modem (L2) and AAA). This may require a proprietary low-speed signaling between Modem (which identifies frequencies [=directions] of high traffic) and AAA. Embodiments are applicable in LTE Rel-8 UL, and for LTE DL especially for an extension carrier of the LTE Rel-10 feature "carrier aggregation" for additional user traffic.

Hence, it is one key idea of embodiments to make use of the frequency selective scheduling capabilities of the scheduler by achieving spatially aware system performance without making the scheduler explicitly aware of the spatial dimension. This may significantly reduce scheduler complexity. Embodiments also allow for effective interference coordination following the idea of "Angular Sorting" in a quite straight-forward way, which may further boost cell capacity. Another important advantage over "traditional way of thinking" for these sorts of spatial techniques is that embodiments do not require multiple CPRI links from Modem to RRH (AAA) to explore the spatial dimension. Instead, only one CPRI is needed, and the spatial dimension may be exploited by the AAA by mapping frequency (=subcarrier index) to space (=beam direction) by this frequency-dependent beamforming. This way, the spatial dimension is exploited as soon as the frequency is exploited (which all legacy schedulers should do anyway), without the need for the scheduler to be aware of this spatial dimension.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant). For example, the means for determining/applying radio resource subset specific the beam pattern may comprise digital and/or analog electrical beam forming circuitry.

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus (400; 500; 800) for determining a beam pattern (180) of at least two antenna elements (160; 460), the at least two antenna elements (160; 460) being feedable with a signal (210; 410) using radio resources of a radio resource set, wherein the radio resource set comprises at least a first radio resource subset associated to a first plurality of users and a second radio resource subset associated to a second plurality of users of a cellular communication system, wherein the first and the second plurality of users are both associated to the same cell of the cellular communication system, the apparatus (400; 500; 800) comprising:
a processor (430) operable to determine, for each of the first and the second radio resource subset of the signal (210; 410), a radio resource subset specific beam pattern (180) of the at least two antenna elements (160; 460), such that a first radio resource subset specific beam pattern (180-1) corresponding to the first radio resource subset is different from a second radio resource subset specific beam pattern (180-2) corresponding to the second radio resource subset.

2. The apparatus (400; 500; 800) according to claim 1, wherein the signal (210; 410) uses a set of frequencies as the radio resource set within a useful signal bandwidth of the signal (210; 410), wherein the set of frequencies comprises at least a first frequency subset and a second frequency subset, the first frequency subset and the second frequency subset each comprising at least one frequency within the useful signal bandwidth, and wherein the processor (430) is operable to determine, for each of the first and the second frequency subset, a frequency subset specific beam pattern (180).

3. The apparatus (400; 500; 800) according to claim 1, wherein the at least two antenna elements (160; 460) form an antenna array (160), and wherein the apparatus (400; 500; 800) further comprises:
an interface (510) for the signal (210; 410) being a digital baseband signal (210), the digital baseband signal (210) comprising at least the first and the second radio resource subset,
wherein the processor (430) is operable to determine, for each of the first and the second radio resource subset of the digital baseband signal (210), a radio resource subset specific beam forming vector (**w*ᵤ***; **w*_{c}***; **w*ₗ***), such that first radio resource subset specific beam pattern (180-*u*) of the antenna array (160) corresponding to a first beam forming vector (**w*ᵤ***) associated to the first radio resource subset (*u*) is different from a second radio resource subset specific beam pattern (180-*l*) of the antenna array (160) corresponding to a second beam forming vector (**w*ₗ***) associated to the second radio resource subset (/).

4. The apparatus (400; 500; 800) according to claim 3, wherein the processor (430) is operable to apply a determined first radio resource subset specific beam forming vector (**w*ᵤ***; **w*_{c}***; **w*ₗ***;), which corresponds to the first radio resource subset (*u; c; l*), to a first part (210-*u*; 210-c; 210-*l*) of the digital baseband signal (210) being associated to the first radio resource subset (*u*; *c*; *l*), and to apply a determined second radio resource subset specific beam forming vector (**w*ᵤ***; **w*_{c}***; **w*ₗ***), which corresponds to the second radio resource subset (*u; c; l*), to a second part (210-*u*; 210-c; 210-*l*) of the digital baseband signal (210) being associated to the second radio resource subset (*u; c;* /).

5. The apparatus (400; 500; 800) according to claim 3, wherein the processor (430) is coupled to a memory device, and wherein the processor (430) is operable to determine the radio resource subset specific beam forming vector (**w*ᵤ***; **w*_{c}***; **w*ₗ***;) for one of the first or the second radio resource subsets (*u*; *c*; *l*) by means of a table lookup in the memory device storing predetermined radio resource subset specific beam forming vectors for both of the first or the second radio resource subsets, or, wherein the processor (430) is operable to determine the radio resource subset specific beam forming vector (**w*ᵤ***; **w*_{c}***; **w*ₗ***;) for one of the first or the second radio resource subsets (*u; c; l*) based on a radio resource subset specific manipulation of a radio resource subset independent beam forming vector (**w₀**).

6. The apparatus (400; 500; 800) according to claim 3, wherein the digital baseband signal (210) is an Orthogonal Frequency Division Multiplexing (OFDM) or Single-Carrier Frequency Division Multiple Access (SC-FDMA) signal using a set (*u; c; l*) of subcarriers within a useful signal bandwidth of the digital baseband signal (210), wherein the set (*u; c; l*) of subcarriers comprises at least a first sub-carrier subset and a second subcarrier subset, and wherein the processor (430) is operable to determine, for each of the first and the second subcarrier subset, a subcarrier subset specific beam forming vector (**w*ᵤ***; **w*_{c}***; **w*ₗ***) comprising, for each of at least two signal branches associated to the at least two antenna elements, a subcarrier subset specific beam forming coefficient corresponding to a subcarrier subset specific beam pattern (180) of the antenna array (160).

7. The apparatus (400; 500; 800) according to claim 6, wherein the processor (430) is operable to determine the subcarrier subset specific beam forming vector (**w*ᵤ***; **w*_{c}***; **w*ₗ***) for one of the first or the second subcarrier subset based on a subcarrier subset specific phase shift of beam forming coefficients of a subcarrier subset independent beam forming vector **(w₀**).

8. The apparatus (400; 500; 800) according to claim 3, wherein the processor (430) is arranged between a Fast Fourier Transform (FFT) processor and an Inverse Fast Fourier Transform (IFFT) processor to determine and/or apply the subcarrier subset specific beam forming vector in the frequency domain.

9. The apparatus (400; 500; 800) according to claim 6, wherein the first subcarrier subset and the second subcarrier subset each comprise a single subcarrier, respectively, wherein the processor (430) is operable to determine, for each of the first and the second single subcarrier, a subcarrier specific beam forming vector (**w*ᵤ***; **w*_{c}***; **w*ₗ***) comprising, for each of at least two signal branches associated to the at least two antenna elements, a subcarrier specific beam forming coefficient corresponding to a subcarrier specific beam pattern (180) of the antenna array (160).

10. The apparatus (400; 500; 800) according to claim 6, wherein the processor (430) comprises, for at least one of at least two signal branches (210-1; 210-2; 210-3) coupled to the antenna array (160), at least one Finite Impulse Response (FIR) filter structure (810), to realize a subcarrier subset specific beam forming coefficient corresponding to a subcarrier resource subset specific beam pattern (180) of the antenna array (160).

11. The apparatus (400; 500; 800) according to claim 10, wherein the at least one Finite Impulse Response (FIR) filter structure (810-1; 810-2; 810-3) is operable, besides realizing the subcarrier subset specific beam forming coefficient, to calibrate an antenna element (160-1; 160-2; 160-3) associated to the one of the at least two signal branches (210-1; 210-2; 210-3).
[Gut!]

12. The apparatus (400; 500; 800) according to claim 1, wherein the processor (430) is operable to adapt a mapping between a radio resource subset (*u; c;* /) and an associated radio resource subset specific beam forming vector (**w*ᵤ***; **w*_{c}***; **w*ₗ***) in accordance to a reported user distribution in the cell of the cellular communication system.

13. A cellular communication system, comprising:
a first base station serving a first cell, the first base station comprising a first apparatus (400; 500; 800) according to claim 1, the first apparatus being associated to at least two first antenna elements (160; 460);
a second base station serving a second cell neighboring the first cell, the second base station comprising a second apparatus (400; 500; 800) according to claim 1, the second apparatus being associated to at least two second antenna elements (160; 460);
wherein a first mapping between at least two radio resource subsets of the first base station and at least two radio resource subset specific beam patterns of the at least two first antenna elements (160; 460) is different from a second mapping between at least two radio resource subsets of the second base station and the at least two radio resource subset specific beam patterns at least two first antenna elements (160; 460), such that an inter-cell interference between the first cell and the second cell is reduced.

14. A method for determining a beam pattern (180) of at least two antenna elements (160; 460), the at least two antenna elements (160; 460) being feedable with a signal (210; 410) using radio resources of a radio resource set, wherein the radio resource set comprises at least a first radio resource subset associated to a first plurality of users and a second radio resource subset associated to a second plurality of users of a cellular communication system, wherein the first and the second plurality of users are both associated to the same cell of the cellular communication system, the method comprising:
determining, for each of the first and the second radio resource subset of the signal (210; 410), a radio resource subset specific beam pattern (180) of the at least two antenna elements (160; 460), such that a first radio resource subset specific beam pattern (180-1) corresponding to the first radio resource subset is different from a second radio resource subset specific beam pattern (180-2) corresponding to the second radio resource subset.

15. A computer program having a program code for performing the method of claim 14, when the computer program is executed on a computer or processor.

## Amended claims

### Amended claims in accordance with Rule 137(2) EPC.

**1.** An apparatus (400; 500; 800) for determining a beam pattern (180) of at least two antenna elements (160; 460), the at least two antenna elements (160; 460) being feedable with a signal (210; 410) using radio resources of a radio resource set, wherein the radio resource set comprises at least a first radio resource subset associated to a first plurality of users and a second radio resource subset associated to a second plurality of users of a cellular communication system, wherein the first and the second plurality of users are both associated to the same cell of the cellular communication system, the apparatus (400; 500; 800) comprising:
a processor (430) operable to determine, for each of the first and the second radio resource subset of the signal (210; 410), a radio resource subset specific beam pattern (180) of the at least two antenna elements (160; 460), such that a downtilt of a first radio resource subset specific beam pattern (180-1) corresponding to the first radio resource subset is different from a downtilt of a second radio resource subset specific beam pattern (180-2) corresponding to the second radio resource subset.

**2.** The apparatus (400; 500; 800) according to claim 1, wherein the signal (210; 410) uses a set of frequencies as the radio resource set within a useful signal bandwidth of the signal (210; 410), wherein the set of frequencies comprises at least a first frequency subset and a second frequency subset, the first frequency subset and the second frequency subset each comprising at least one frequency within the useful signal bandwidth, and wherein the processor (430) is operable to determine, for each of the first and the second frequency subset, a frequency subset specific beam pattern (180).

**3.** The apparatus (400; 500; 800) according to claim 1, wherein the at least two antenna elements (160; 460) form an antenna array (160), and wherein the apparatus (400; 500; 800) further comprises:
an interface (510) for the signal (210; 410) being a digital baseband signal (210), the digital baseband signal (210) comprising at least the first and the second radio resource subset,
wherein the processor (430) is operable to determine, for each of the first and the second radio resource subset of the digital baseband signal (210), a radio resource subset specific beam forming vector (**w*ᵤ***; **w*_{c}***; **w*ₗ***), such that first radio resource subset specific beam pattern (180-*u*) of the antenna array (160) corresponding to a first beam forming vector (**w*ᵤ***) associated to the first radio resource subset (*u*) is different from a second radio resource subset specific beam pattern (180-*l*) of the antenna array (160) corresponding to a second beam forming vector (**w*ₗ***) associated to the second radio resource subset (*l*).

**4.** The apparatus (400; 500; 800) according to claim 3, wherein the processor (430) is operable to apply a determined first radio resource subset specific beam forming vector (**w*ᵤ***; **w*_{c}***; **w*ₗ***;), which corresponds to the first radio resource subset (*u; c*; *l*), to a first part (210-*u*; 210-*c*; 210-*l*) of the digital baseband signal (210) being associated to the first radio resource subset (*u;* c; *l*), and to apply a determined second radio resource subset specific beam forming vector (**w*ᵤ***; **w*_{c}***; **w*ₗ***), which corresponds to the second radio resource subset (*u;* c; *l*), to a second part (210-*u*; 210-*c*; 210-/) of the digital baseband signal (210) being associated to the second radio resource subset (*u;* c; /).

**5.** The apparatus (400; 500; 800) according to claim 3, wherein the processor (430) is coupled to a memory device, and wherein the processor (430) is operable to determine the radio resource subset specific beam forming vector (**w*ᵤ***; **w*_{c}***; **w*ₗ***;) for one of the first or the second radio resource subsets (*u; c; l*) by means of a table lookup in the memory device storing predetermined radio resource subset specific beam forming vectors for both of the first or the second radio resource subsets, or, wherein the processor (430) is operable to determine the radio resource subset specific beam forming vector (**w*ᵤ***; **w*_{c}***; **w*ₗ***;) for one of the first or the second radio resource subsets (*u; c; l*) based on a radio resource subset specific manipulation of a radio resource subset independent beam forming vector (**w₀**).

**6.** The apparatus (400; 500; 800) according to claim 3, wherein the digital baseband signal (210) is an Orthogonal Frequency Division Multiplexing (OFDM) or Single-Carrier Frequency Division Multiple Access (SC-FDMA) signal using a set (*u; c; l*) of subcarriers within a useful signal bandwidth of the digital baseband signal (210), wherein the set (*u; c; l*) of subcarriers comprises at least a first subcarrier subset and a second subcarrier subset, and wherein the processor (430) is operable to determine, for each of the first and the second subcarrier subset, a subcarrier subset specific beam forming vector (**w*ᵤ***; **w*_{c}***; **w*ₗ***) comprising, for each of at least two signal branches associated to the at least two antenna elements, a subcarrier subset specific beam forming coefficient corresponding to a subcarrier subset specific beam pattern (180) of the antenna array (160).

**7.** The apparatus (400; 500; 800) according to claim 6, wherein the processor (430) is operable to determine the subcarrier subset specific beam forming vector (**w*ᵤ***; **w*_{c}***; **w*ₗ***) for one of the first or the second subcarrier subset based on a subcarrier subset specific phase shift of beam forming coefficients of a subcarrier subset independent beam forming vector (**w₀**).

**8.** The apparatus (400; 500; 800) according to claim 6, wherein the processor (430) is arranged between a Fast Fourier Transform (FFT) processor and an Inverse Fast Fourier Transform (IFFT) processor to determine and/or apply the subcarrier subset specific beam forming vector in the frequency domain.

**9.** The apparatus (400; 500; 800) according to claim 6, wherein the first subcarrier subset and the second subcarrier subset each comprise a single subcarrier, respectively, wherein the processor (430) is operable to determine, for each of the first and the second single subcarrier, a subcarrier specific beam forming vector (**w*ᵤ***; **w*_{c}***; **w*ₗ***) comprising, for each of at least two signal branches associated to the at least two antenna elements, a subcarrier specific beam forming coefficient corresponding to a subcarrier specific beam pattern (180) of the antenna array (160).

**10.** The apparatus (400; 500; 800) according to claim 6, wherein the processor (430) comprises, for at least one of at least two signal branches (210-1; 210-2; 210-3) coupled to the antenna array (160), at least one Finite Impulse Response (FIR) filter structure (810), to realize a subcarrier subset specific beam forming coefficient corresponding to a subcarrier resource subset specific beam pattern (180) of the antenna array (160).

**11.** The apparatus (400; 500; 800) according to claim 10, wherein the at least one Finite Impulse Response (FIR) filter structure (810-1; 810-2; 810-3) is operable, besides realizing the subcarrier subset specific beam forming coefficient, to calibrate an antenna element (160-1; 160-2; 160-3) associated to the one of the at least two signal branches (210-1; 210-2; 210-3).

**12.** The apparatus (400; 500; 800) according to claim 1, wherein the processor (430) is operable to adapt a mapping between a radio resource subset (*u; c; l*) and an associated radio resource subset specific beam forming vector (**w*ᵤ***; **w*_{c}***; **w*ₗ***) in accordance to a reported user distribution in the cell of the cellular communication system.

**13.** A cellular communication system, comprising:
a first base station serving a first cell, the first base station comprising a first apparatus (400; 500; 800) according to claim 1, the first apparatus being associated to at least two first antenna elements (160; 460);
a second base station serving a second cell neighboring the first cell, the second base station comprising a second apparatus (400; 500; 800) according to claim 1,
the second apparatus being associated to at least two second antenna elements (160; 460);
wherein a first mapping between at least two radio resource subsets of the first base station and at least two radio resource subset specific beam patterns of the at least two first antenna elements (160; 460) is different from a second mapping between at least two radio resource subsets of the second base station and the at least two radio resource subset specific beam patterns at least two first antenna elements (160; 460), such that an inter-cell interference between the first cell and the second cell is reduced.

**14.** A method for determining a beam pattern (180) of at least two antenna elements (160; 460), the at least two antenna elements (160; 460) being feedable with a signal (210; 410) using radio resources of a radio resource set, wherein the radio resource set comprises at least a first radio resource subset associated to a first plurality of users and a second radio resource subset associated to a second plurality of users of a cellular communication system, wherein the first and the second plurality of users are both associated to the same cell of the cellular communication system, the method comprising:
determining, for each of the first and the second radio resource subset of the signal (210; 410), a radio resource subset specific beam pattern (180) of the at least two antenna elements (160; 460), such that a downtilt of a first radio resource subset specific beam pattern (180-1) corresponding to the first radio resource subset is different from a downtilt of a second radio resource subset specific beam pattern (180-2) corresponding to the second radio resource subset.

**15.** A computer program having a program code for performing the method of claim 14, when the computer program is executed on a computer or processor.
